## Europäisches Patentamt

## European Patent Office

## Office européen des brevets

(19)

(11) Veröffentlichungsnummer: **0 142 592**
**B1**

(12) **EUROPÄISCHE PATENTSCHRIFT**

(45) Veröffentlichungstag der Patentschrift:
**07.01.88**

(21) Anmeldenummer: **83890211.2**

(22) Anmeldetag: **15.11.83**

(51) Int. Cl.⁴: **B 23 C 3/06**

(54) **Fräsmaschine zur Bearbeitung von Kurbelwellen od. dgl.**

(43) Veröffentlichungstag der Anmeldung:
**29.05.85 Patentblatt 85/22**

(45) Bekanntmachung des Hinweises auf die Patenterteilung:
**07.01.88 Patentblatt 88/1**

(84) Benannte Vertragsstaaten:
**AT DE FR GB IT**

(56) Entgegenhaltungen:
**EP - A - 0 018 000**
**DE - A - 2 808 880**
**DE - A - 3 117 030**
**DE - B - 2 836 383**
**FR - A - 2 188 467**
**FR - A - 2 456 583**
**US - A - 2 650 522**

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Blaimschein, Gottfried, Dipl.-Ing., Puchstrasse 2, A-4400 Steyr (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

## Beschreibung

Die Erfindung betrifft eine Fräsmaschine zur Bearbeitung von Kurbelwellen oder dgl., mit dem Vorschub für eine Rundbearbeitung zur Werkstückachse kon- oder exzentrischer Querschnitte entsprechend in einer Normalebene auf die Werkstückachse bewegbaren Fräseinheiten und einer das Werkstück zusätzlich zur endseitigen Einspannung zwischen den Fräseinheiten abstützenden Lünette, wobei die Fräseinheiten jeweils eine antreibbare Werkzeugtrommel zur Aufnahme ringförmiger, innenschneidender Messerköpfe aufweisen.

Fräsmaschinen mit zwei Fräseinheiten und Ein- oder Mehrfachmesserköpfen als Fräswerkzeuge werden zur Massenfertigung von Kurbel- oder Nockenwellen und dgl. eingesetzt und führen aufgrund der gleichzeitigen Bearbeitung mehrerer Querschnitte zu kurzen Bearbeitungszeiten. Allerdings muss dabei das recht labile Werkstück, um die gewünschte Bearbeitungsgenauigkeit erreichen zu können, zusätzlich zur endseitigen Einspannung abgestützt werden, was gerade bei dem Ausfräsen wegen der höheren Standzeit und der besseren Bearbeitungsqualität vorzuziehenden Innenfräsen Schwierigkeiten bereitet, da die das Werkstück umschliessenden Werkzeugtrommeln einem Lünetteneinsatz entgegenstehen. Um daher bei einer Aufspannung beispielsweise alle Lagerzapfen oder alle Hubzapfen bearbeiten zu können, ist es bisher notwendig, jeder Fräseinheit einen eigenen, auf einem Längsschlitten sitzenden Frässchlitten zuzuordnen und zwischen den einzelnen Schlitten Platz zur Anordnung der Lünetten offen zu lassen. Eine gleichzeitige Bearbeitung aller Lager- oder Hubzapfen ist dadurch nicht möglich, sondern es muss nach entsprechender Längspositionierung der Fräseinheiten in mehreren Schritten gearbeitet werden. Ausserdem bedingen die für jede Fräseinheit erforderlichen Schlitten je nach drehendem oder stillstehendem Werkstück in fünf oder sechs Koordinatenachsen wirksame Antriebs- und Steuerungseinrichtungen, wozu noch kommt, dass die Längspositionierung der Fräseinheiten eine beträchtliche Erhöhung der Nebenzeiten und damit eine äusserst unerwünschte Verlängerung der Gesamtbearbeitungszeit verursacht.

Um die Vorteile des Innenfräsverfahrens nutzen und dennoch kurze Bearbeitungszeiten einhalten zu können, wurde gemäss der DE-A1-31 17 030 bereits vorgeschlagen, eine Fräsmaschine mit zwei Bearbeitungsstationen auszustatten und in der einen Bearbeitungsstation einen Teil der Kurbelwelle und in der anderen, zeitlich entsprechend versetzt, den restlichen Teil dieser Kurbelwelle zu bearbeiten, wobei es dann zu einer gleichzeitigen Bearbeitung jeweils zweier Kurbelwellen kommt. Hier ist es möglich, das einzelne Werkstück in jeder Station ohne Längspositionierung der verwendeten Fräseinheit an mehreren Querschnitten gleichzeitig zu bearbeiten und an den verbleibenden, nicht zu bearbeitenden Teilen zusätzlich zur endseitigen Einspannung abzustützen, doch muss diese Möglichkeit, abgesehen vom entsprechend grossen Konstruktions- und Bauaufwand der ganzen Maschine, mit einem Umspannen jedes einzelnen Werkstückes von der einen Station in die andere Station erkauft werden, was wiederum eine Nebenzeiterhöhung bedeutet und zudem durch einen Mittenverlust beim Neueinspannen des Werkstückes die Gefahr von Bearbeitungsungenauigkeiten mit sich bringt.

Der Erfindung liegt daher die Aufgabe zugrunde, diese Mängel zu beseitigen und eine Kurbelwellenfräsmaschine der eingangs geschilderten Art zu schaffen, die sich einerseits durch ihre vergleichsweise einfache Gesamtkonzeption auszeichnet und anderseits das Erreichen kürzester Bearbeitungszeiten erlaubt.

Die Erfindung löst diese Aufgabe dadurch, dass wenigstens zwei, vorzugsweise alle Fräseinheiten auf einem gemeinsamen, vorschubgerecht verschiebbaren Frässchlitten sitzen und der Frässchlitten und die Fräseinheiten einen Freiraum für die Anordnung der Lünette bilden. Die auf einem gemeinsamen Frässchlitten aufgebauten Fräseinheiten können zwar nicht mehr unabhängig voneinander eingesetzt werden, sondern sind stets der gleichen Vorschubbewegung unterworfen, doch ergibt sich durch die damit gewonnene Vereinheitlichung von Antrieb und Steuerung eine wesentliche Rationalisierung der Maschinenkonzeption. Da gerade bei der Massenfertigung von Kurbelwellen oder dgl. immer das gleiche Werkstück zu bearbeiten ist, können die Fräseinheiten ohnehin nur in stets gleichbleibender Relation eingesetzt werden, so dass mit dem Verlust der Einsatzfreiheit keinerlei Nachteil verbunden ist, im Gegenteil, sich wegen des Fehlens einer nach jedem Bearbeitungsschritt notwendigen Positionierung der Fräseinheiten die Nebenzeiten beträchtlich verkürzen. Der zwischen den einzelnen Fräseinheiten im gemeinsamen Frässchlitten ausgesparten Freiraum ermöglicht den Ansatz der Lünetten für die zusätzliche Werkstückeinspannung, so dass in einer Aufspannung gleichzeitig alle Querschnitte bearbeitet werden können, die sich mit gleichen Vorschubbewegungen unterworfenen Fräseinheiten bzw. Messerköpfen bearbeiten lassen. So erlaubt die erfindungsgemässe Fräsmaschine bei einfachstem Aufbau und einheitlichen, nicht mit fünf oder sechs, sondern lediglich mit zwei Koordinatenachsen arbeitenden Antriebs- und Steuerungseinrichtungen für den Frässchlitten das gleichzeitige Bearbeiten aller Lagerzapfen und Endflansche von Kurbelwellen mittels zueinander koaxialer, entsprechende Messerköpfe tragender Werkzeugtrommeln. Die Werkzeugtrommeln können aber auch zur Bearbeitung von Hubzapfen oder anderen exzentrischen Querschnitten mit zueinander versetzten Achsen angeordnet sein, wobei dann als Frässchlitten ein Kreuzschlitten oder dgl. zu verwenden ist und die Lage der Trommelachsen relativ zueinander Achsabstand und Winkellage der zu bearbeitenden, beim Einspannen auf die Fräseinheiten auszurichtenden Querschnitt entsprechen muss. Es sind wiederum nur in zwei Koordinatenachsen wirksame Antriebs- und Steuerungseinrichtungen erforderlich, und es ist dennoch möglich, z. B. alle Hubzapfen gleichzeitig zu bearbeiten.

Sind nach einer Weiterbildung der Erfindung die Fräseinheiten zueinander relativ verstellbar am Frässchlitten gelagert, können mit ein und derselben Fräsmaschine verschieden dimensionierte und gestaltete Werkstücke stets gleich vorteilhaft bearbeitet werden. Dabei ist die Verstellbarkeit je nach Einsatzbereich der Maschine axial, vertikal oder horizontal, und für universelle Anwendungsmöglichkeiten wäre auch eine kombinierte Verstellbarkeit möglich, so dass sich die Fräseinheiten an unterschiedliche Exzentrizitäten, Achsabstände, Winkelversätze und dgl. anpassen lassen.

Eine einfache kompakte Konstruktion wird erreicht, wenn erfindungsgemäss der Frässchlitten für jede Fräseinheit einen eigenen Lagerblock bildet, welche Lagerblöcke mit gegenseitigem Axialabstand frei vorkragend an der werkstückzugewandten Seite des Schlittenkörpers angeordnet sind. Diese Lagerblöcke bieten jeder Fräseinheit eine stabile Aufnahme und machen zwischen sich genügend Platz für den Aufbau der Lünetten.

Sind die Lagerblöcke an einem als Frässchlitten vorgesehenen Querschlitten angesetzt, muss das Werkstück während der Bearbeitung gedreht werden, und die Bearbeitungsmöglichkeiten bleiben beschränkt. Besteht nach einer Ausgestaltung der Erfindung der Frässchlitten aus einem Querschlitten und einem Hochschlitten, wobei der eine Führungssäule des Querschlittens umgreifende Hochschlitten die Lagerblöcke für die Fräseinheiten bildet, ergänzen sich Quer- und Hochschlitten zu einem einfachen Kreuzschlitten, mit dem die Fräseinheiten auch einer umlaufenden Vorschubbewegung unterworfen werden können. Es lassen sich Hub- und Lagerzapfen ohne Werkstücke bearbeiten.

Ist weiters wenigstens einer der Lagerblöcke als gegenüber dem Hochschlitten schiebeverstellbarer Trägerschlitten ausgebildet, wird die gewünschte Relativbewegung der Fräseinheiten gegeneinander und gegenüber dem Frässchlitten ohne besonderen Mehraufwand möglich.

Um Vibrationen zu vermeiden und die Werkzeugführung zu stabilisieren, können erfindungsgemäss die Lagerblöcke im frei vorkragenden Bereich über Abstandhalter axial miteinander verspannt werden.

In der Zeichnung ist der Erfindungsgegenstand rein schematisch dargestellt, und zwar zeigen

Fig. 1 und 2 ein erstes Ausführungsbeispiel einer erfindungsgemässen Fräsmaschine in Stirnansicht mit weggelassenem vorderem Spannstock und in teilgeschnittener Draufsicht,

Fig. 3 die teilgeschnittene Draufsicht eine gegenüber dem ersten Ausführungsbeispiel etwas abgeänderten Ausführung der erfindungsgemässen Fräsmaschine, die

Fig. 4 und 5 ein zweites Ausführungsbeispiel einer erfindungsgemässen Fräsmaschine in Stirnansicht mit weggelassenem Spannstock und in teilgeschnittener Draufsicht, die

Fig. 6 und 7 ein drittes Ausführungsbeispiel einer erfindungsgemässen Fräsmaschine in Stirnansicht mit weggelassenem Spannstock und in teilgeschnittener Draufsicht sowie die

Fig. 8 und 9 ein viertes Ausführungsbeispiel einer erfindungsgemässen Fräsmaschine in Stirnansicht mit weggelassenem Spannstock und in teilgeschnittener Draufsicht.

Auf einem Maschinenbett 1 sitzen zwei Spannstöcke 2, 3, von denen zumindest der eine Spannstock 3 entlang von Längsschienen 4 des Maschinenbettes 1 verschiebbar ist und von denen der andere Spannstock 2 eine über einen Hydraulikbetrieb 5 ausfahrbare Pinole 6 aufweist, um durch aufeinander abgestimmte Bewegungen von Spannstock 3 und Pinole 6 ein axiales Wechseln der zur Bearbeitung zwischen den Spannstöcken 2, 3 zu spannenden Werkstücke vornehmen zu können. Auf normal zur Werkstückachse verlaufenden Querschienen 7 des Maschinenbettes 1 ist ein Frässchlitten 8 geführt, der aus einem Querschlitten 9 und einem eine Führungssäule 9a des Querschlittens 9 umgreifenden Hochschlitten 10 besteht. Querschlitten 9 und Hochschlitten 10 sind jeweils über Spindeltriebe 9b, 10b unabhängig voneinander verschiebbar, so dass sich mit dem Frässchlitten 8 in einer Normalebene auf die Werkstückachse beliebige Vorschubbewegungen ansteuern lassen.

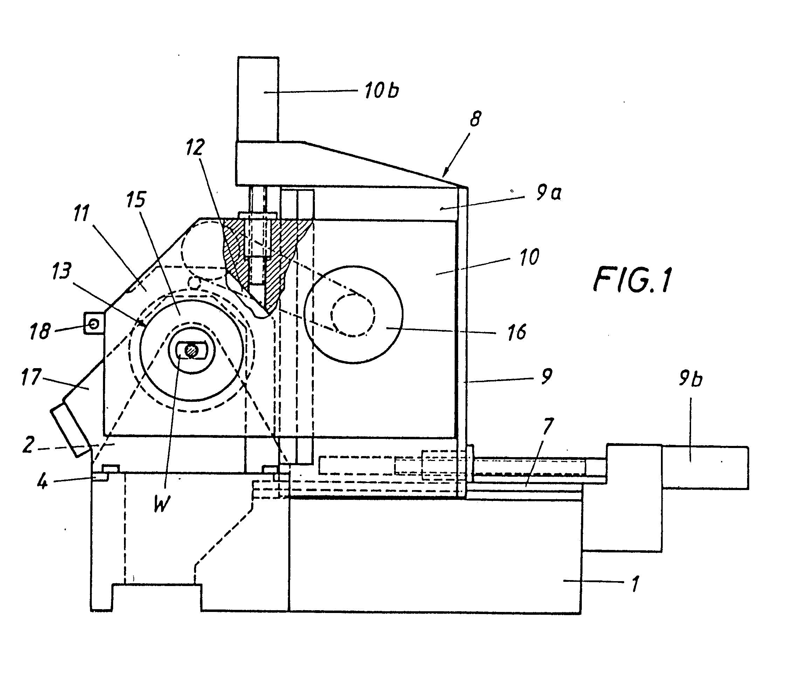

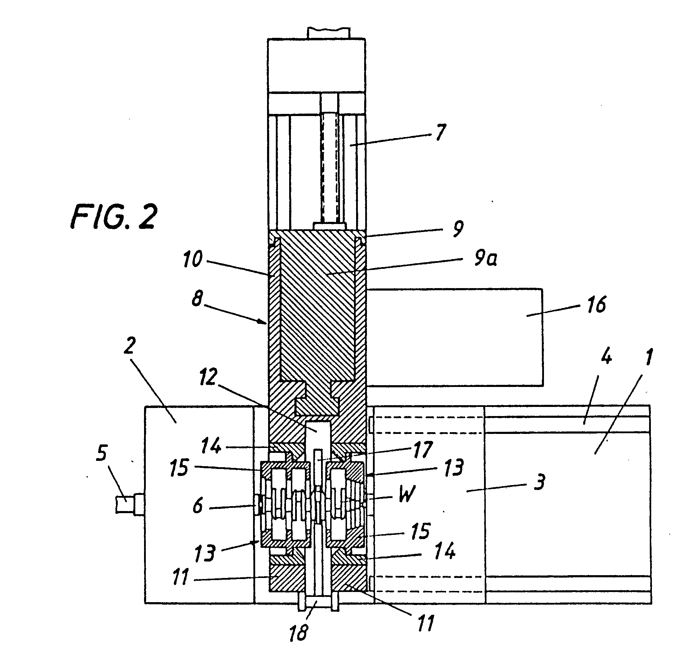

Gemäss dem Ausführungsbeispiel nach Fig. 1 und 2 sind am Hochschlitten 10 zwei frei vorkragende Lagerblöcke 11 angeordnet, die zwischen sich einen Freiraum 12 offen lassen. In den beiden Lagerblöcken 11 sind koaxial zwei Fräseinheiten 13 angeordnet, die jeweils aus einer Werkzeugtrommel 14 und einem innenschneidenden Mehrfachmesserkopf 15 bestehen. Die beiden Fräseinheiten 13 werden über einen gemeinsamen Motor 16 unter Zwischenschaltung nur angedeuteter Übertragungs- und Synchronisationseinrichtungen angetrieben und erlauben das gleichzeitige Bearbeiten aller Lagerzapfen und der Endbereiche einer vierhübigen Kurbelwelle. Diese Kurbelwelle wird dabei zusätzlich zur endseitigen Einspannung durch die Spannstöcke 2, 3 mit einer Lünette 17 abgestützt, die im Freiraum 12 zwischen den beiden Lagerblöcken 11 Platz findet und daher auch zwischen den beiden Fräseinheiten 13 die Kurbelwelle W spannen kann. Da ausserdem die beiden Lagerblöcke 11 über einen Abstandhalter 18 zur Vermeidung von Vibrationen axial miteinander verspannt sind, werden hohe Bearbeitungsgenauigkeiten erzielt. Für beide Fräseinheiten 13 genügen aufgrund des gemeinsamen Frässchlittens 8 einheitliche, in nur zwei Koordinatenachsen wirksame Steuerungs- und Antriebseinrichtungen und durch die gleichzeitige Bearbeitung aller Lagerzapfen sind kürzeste Bearbeitungszeiten möglich.

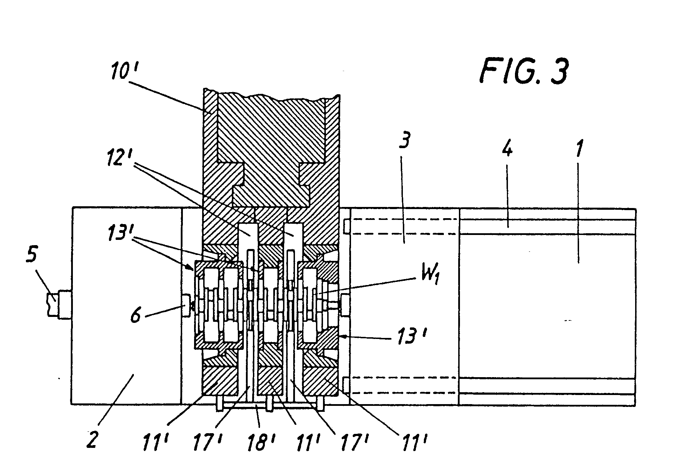

Sind, wie in Fig. 3 veranschaulicht, statt zweier Lagerblöcke drei Lagerblöcke 11' vorgesehen, die jeweils eine eigene Fräseinheit 13' aufnehmen und zwischen sich entsprechende Freiräume 12' freilassen, können gleichzeitig auch alle Lagerzapfen einer sechshübigen Kurbelwelle $W_1$ bearbeitet

werden. Auch diese drei Lagerblöcke 11' sind über Abstandhalter 18' miteinander axial verspannt, und die Kurbelwelle $W_1$ kann jeweils zwischen den Fräseinheiten 13' durch Lünetten' abgestützt werden. Sind die Lagerblöcke 11' mit dem Hochschlitten 10' des Frässchlittens 8' nicht einstückig ausgebildet, sondern Schlitten und Lagerblöcke aus einzelnen Bauteilen zusammengesetzt, ist es durchaus möglich, einen Frässchlitten 8' umzurüsten und ihn mit für verschiedene Fräseinheiten geeigneten Lagerblöcken auszurüsten. Unabhängig von dieser Ausrüstung wird stets ein axialer Werkstückwechsel durchgeführt, und zum Wechseln der Messerköpfe muss der Frässchlitten 8' den Querschienen 7 entlang zurückfahren, bis die Messerköpfe seitlich zugänglich sind.

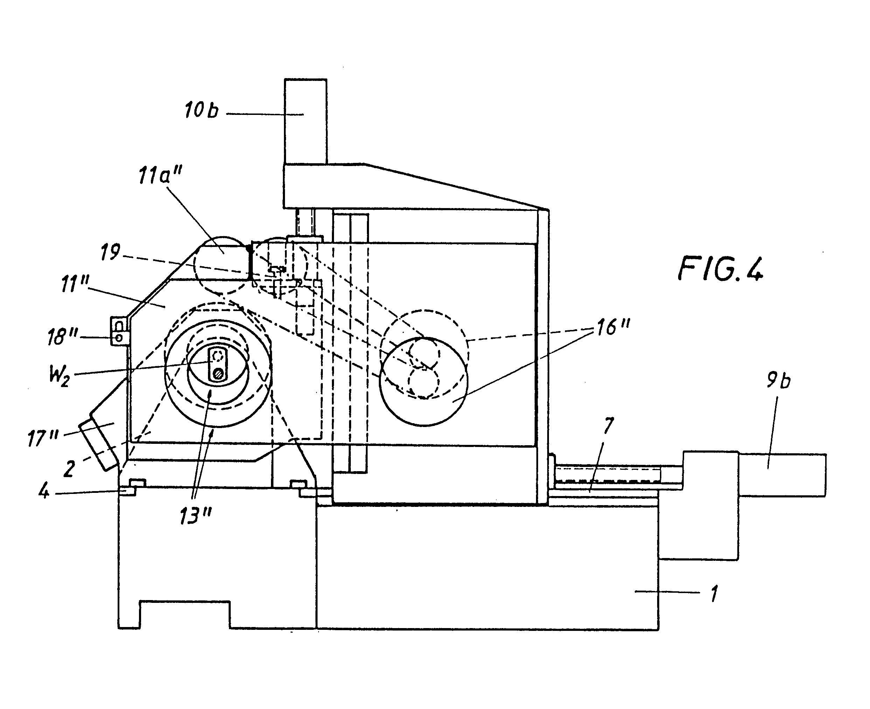

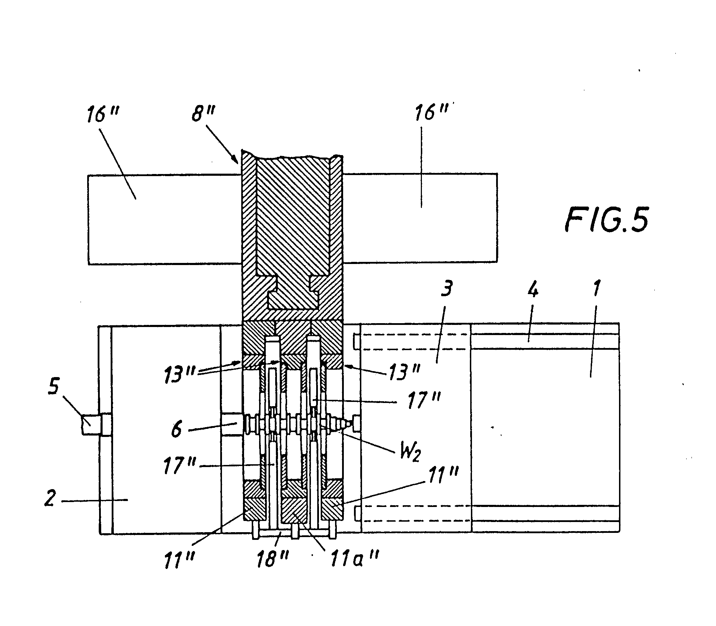

In den Fig. 4 und 5 ist eine Fräsmaschine angedeutet, deren Frässchlitten 8" drei Lagerblöcke 11" für drei Fräseinheiten 13" aufweist. Allerdings ist hier der mittlere Lagerblock 11a" als Trägerschlitten ausgebildet, der über einen Stelltrieb 19 relativ zu den beiden anderen Lagerblöcken 11" vertikal verstellbar ist. Dadurch lassen sich die Fräseinheiten 13" gegeneinander versetzen, und es ist möglich, die Hubzapfen einer vierhübigen Kurbelwelle $W_2$ mit in Reihe angeordneten Hubzapfen gleichzeitig zu bearbeiten. Dazu müssen die Achsen der mittleren Fräseinheit und die Achsen der beiden seitlichen Fräseinheiten gegeneinander um die Grösse des Kurbelhubes versetzt sein, das über den Stelltrieb 19 erreicht wird. Beim Spannen der Kurbelwelle $W_2$ ist ausserdem auf ein vertikales Ausrichten der Hubzapfen zu achten. Da bei dieser Fräsmaschine die Fräseinheiten 13" gegeneinander versetzt sind, werden zum Antrieb zwei Motoren 16" verwendet, so dass das Verstellen der Fräseinheiten ohne Schwierigkeiten durchgeführt werden kann. In den Freiräumen 12" zwischen den Lagerblöcken 11", 11a" sind zur Abstützung zwei Lünetten 17" eingesetzt, und die Lagerblöcke können nach ihrer Einstellung wiederum über geeignete Abstandhalter 18" gegeneinander verspannt werden.

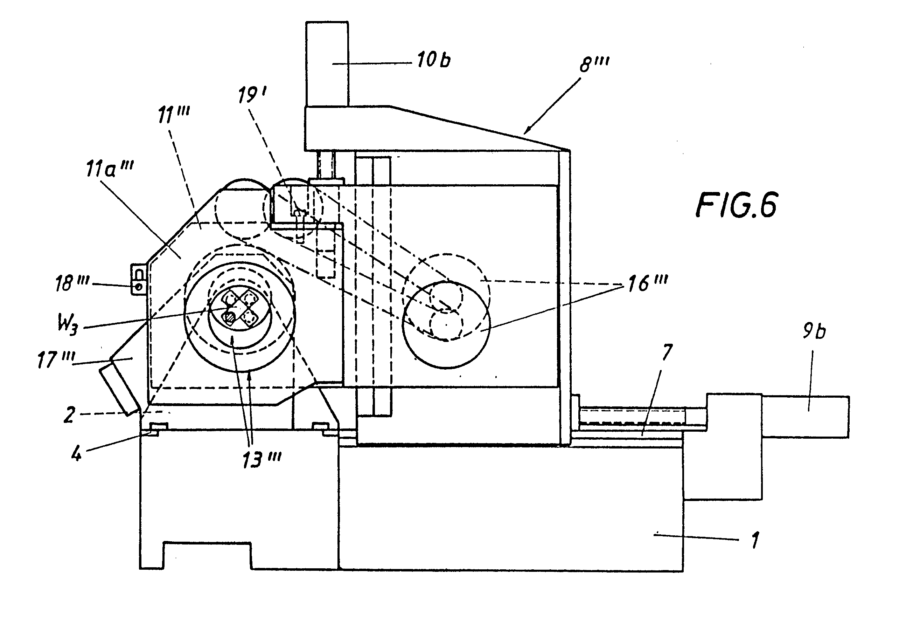

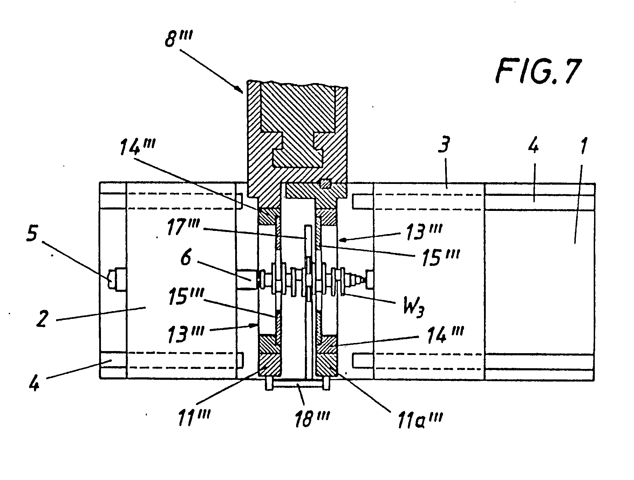

Gemäss dem Ausführungsbeispiel nach Fig. 6 und 7 können die Hubzapfen einer vierhübigen Kurbelwelle $W_3$ mit winkelversetzten Hubzapfen paarweise bearbeitet werden, wozu am Frässchlitten 8''' ein fester Lagerblock 11''' und ein als vertikal verschiebbarer Trägerschlitten 11a''' ausgebildeter Lagerblock vorgesehen sind. Die Kurbelwelle $W_3$ wird zur Bearbeitung so eingespannt, dass jeweils zwei der Hubzapfen vertikal übereinanderliegen, und der Axialabstand dieser beiden Hubzapfen bestimmt auch den Axialversatz der beiden Fräseinheiten 13''', der mit dem Stelltrieb 19' einstellbar ist. Die Fräseinheiten 13''' sind entsprechend der paarweisen Hubzapfenbearbeitung an ihren Werkzeugtrommeln 14''' jeweils nur mit Einfachmesserköpfen 15''' bestückt, welche Messerköpfe in ihrem Axialabstand der beiden zu bearbeitenden Hubzapfen angepasst sind. Diese Hubzapfen können dann gemeinsam mit einheitlicher Vorschubbewegung durch den Frässchlitten 8''' bearbeitet werden. Um die gegenseitige Verstellbarkeit der Fräseinheiten 13''' einfach berücksichtigen zu können, gibt es für jede einen eigenen Motor 16'''. Auch hier ist zum Erreichen guter Bearbeitungsqualitäten zwischen den Lagerblöcken 11''', 11a''' eine Lünette 17'''' vorgesehen, und die beiden Lagerblöcke können über den Abstandhalter 18''' axial miteinander verspannt werden. Nach dem Bearbeiten des einen Zapfenpaares muss die Kurbelwelle $W_3$ neu positioniert werden, was z.B. durch ein Verfahren der beiden Spannstöcke 2, 3 problemlos möglich ist.

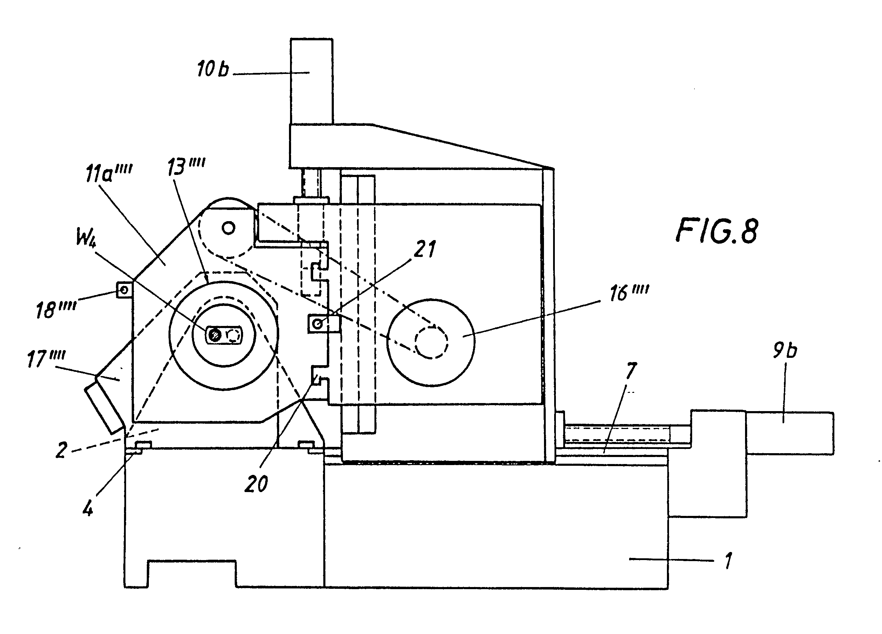

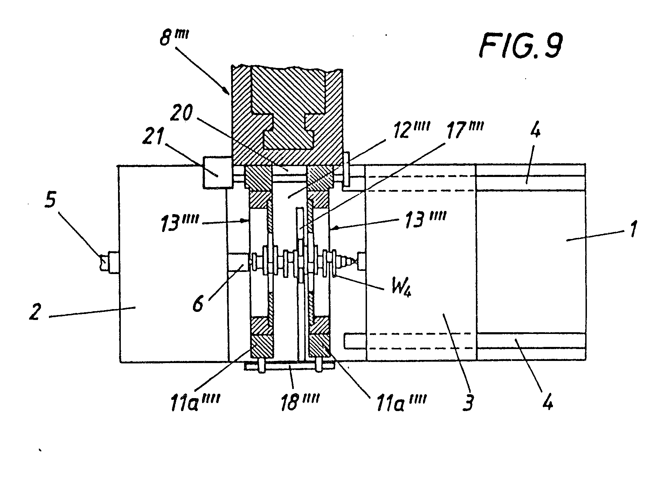

Wie im Ausführungsbeispiel nach den Fig. 8 und 9 angedeutet, können am Frässchlitten 8'''' auch zwei als entlang von Horizontalschienen 20 axial verschiebbare Trägerschlitten 11'''' ausgebildete Lagerblöcke angeordnet sein, deren gegenseitiger Axialabstand über einen Stelltrieb 21 veränderbar ist. Dadurch können einander paarweise entsprechende Zapfen beliebiger Kurbelwellen $W_4$ gleichzeitig bearbeitet werden, ohne den Frässchlitten 8'''' oder das Werkstück $W_4$ positionieren zu müssen, da die Positionierung der Fräseinheiten 13'''' durch das Verstellen der Lagerblöcke 11'''' allein erfolgen kann. Auch hier bleibt zwischen den Lagerblöcken ein Freiraum 12'''' zum Einsatz einer Lünette 17'''' und auch ein axiales Zusammenspannen der Lagerblöcke durch entsprechend längenverstellbare Abstandhalter 18'''' ist ohne Schwierigkeiten möglich.

Die erfindungsgemässe Fräsmaschine ist vor allem zur Massenfertigung von Kurbel- oder Nockenwellen geeignet und zeichnet sich durch ihre rationelle Arbeitsweise bei vergleichsweise geringem Bauaufwand aus, wozu noch ihre grosse Anpassungsfähigkeit an bestimmte Werkstücke und Arbeitsprogramme kommt.

## Patentansprüche

1. Fräsmaschine zur Bearbeitung von Kurbelwellen oder dgl., mit dem Vorschub für eine Rundbearbeitung zur Werkstückachse kon- oder exzentrischer Querschnitte entsprechend in einer Normalebene auf die Werkstückachse bewegbaren Fräseinheiten (13) und einer das Werkstück (W) zusätzlich zur endseitigen Einspannung zwischen den Fräseinheiten (13) abstützenden Lünette (17), wobei die Fräseinheiten (13) jeweils eine antreibbare Werkzeugtrommel (14) zur Aufnahme ringförmiger, innenschneidender Messerköpfe (15) aufweisen, dadurch gekennzeichnet, dass wenigstens zwei, vorzugsweise alle Fräseinheiten (13) auf einem gemeinsamen, vorschubgerecht verschiebbaren Frässchlitten (8) sitzen und der Frässchlitten (8) und die Fräseinheiten (13) einen Freiraum (12) für die Anordnung der Lünette (17) bilden.

2. Fräsmaschine nach Anspruch 1, dadurch gekennzeichnet, dass die Fräseinheiten (13) zueinander relativ verstellbar am Frässchlitten (8) gelagert sind.

3. Fräsmaschine nach Anspruch 1 oder 2, dadurch gekennzeichnet, dass der Frässchlitten (8) für jede Fräseinheit (13) einen eigenen Lagerblock (11) bildet, welche Lagerblöcke (11) mit gegenseitigem Axialabstand frei vorkragend an der werkstückzugewandten Seite des Schlittenkörpers angeordnet sind.

4. Fräsmaschine nach Anspruch 3, dadurch gekennzeichnet, dass der Frässchlitten (8) aus einem Querschlitten (9) und einem Hochschlitten (10) besteht, wobei der eine Führungssäule (9a) des Querschlittens (9) umgreifende Hochschlitten (10) die Lagerblöcke (11) für die Fräseinheiten (13) bildet.

5. Fräsmaschine nach den Ansprüchen 2 und 4, dadurch gekennzeichnet, dass wenigstens einer der Lagerblöcke (11a) als gegenüber dem Hochschlitten (10) schiebeverstellbarer Trägerschlitten ausgebildet ist.

6. Fräsmaschine nach einem der Ansprüche 3 bis 5, dadurch gekennzeichnet, dass die Lagerblöcke (11) im frei vorkragenden Bereich über Abstandhalter (18) axial miteinander verspannbar sind.

## Claims

1. A milling machine for machining crankshafts or the like, comprising milling units (13), which are movable in a plane that is normal to the axis of the workpiece so as to effect the feed movement for a circular machining of cross-sections which are concentric or eccentric to the axis of the workpiece, and a backrest (17) for additionally supporting the workpiece (W), which is gripped at its ends, wherein each of the milling units (13) comprises a tool drum (14), which is adapted to be driven and serves to accommodate internally cutting, annular inserted-tooth cutters (15), characterized in that at least two and preferably all milling units (13) are mounted on a common milling carriage (8), which is displaceable to perform the feed movement, and the milling carriage (8) and the milling units (13) define a free space (12) for accommodating the backrest (17).

2. A milling machine according to claim 1, characterized in that the milling units (13) are movably mounted on the milling carriage (8) to be movable relative to each other.

3. A milling machine according to claim 1 or 2, characterized in that the milling carriage comprises a separate bearing block (11) for each milling unit (13) and said bearing blocks (11) are axially spaced apart and freely protrude from that side of the carriage body which faces the workpiece.

4. A milling machine according to claim 3, characterized in that the milling carriage (8) consists of a cross-slide (9) and a vertical slide (10), and the vertical slide (10) embraces a guide column (9a) of the cross-slide and constitutes the bearing blocks (11) for the milling units (13).

5. A milling machine according to claims 2 and 4, characterized in that at least one of the bearing blocks (11a) constitutes a carrying slide, which is displaceable for an adjustment relative to the vertical slide (10).

6. A milling machine according to any of claims 3 to 5, characterized in that the freely protruding portions of the bearing blocks (11) are adapted to be axially forced against each other with spacers (18) interposed.

## Revendications

1. Fraiseuse pour l'usinage de vilebrequins ou analogues, munie d'unités de fraisage (13) pouvant se mouvoir dans un plan normal à l'axe de la pièce conformément à l'avance pour un usinage circulaire de sections concentriques à l'axe de la pièce ou excentrées par rapport à celui-ci, et d'une lunette (17) soutenant la pièce (W) entre les unités de fraisage (13), en plus du serrage terminal, les unités de fraisage (13) présentant chacune un tambour d'outil (14) pouvant êre entraîné, pour le logement de têtes de fraisage annulaires (15) coupant intérieurement, caractérisée par le fait qu'au moins deux unités de fraisage (13), de préférence toutes, sont montées sur un chariot porte-fraise commun (8) pouvant coulisser conformément à l'avance et que le chariot porte-fraise (8) et les unités de fraisage (13) forment un espace libre pour la disposition de la lunette (17).

2. Fraiseuse selon la revendication 1, caractérisée par le fait que les unités de fraisage (13) sont montées sur le chariot porte-fraise (8) de façon réglable relativement les unes par rapport aux autres.

3. Fraiseuse selon l'une des revendications 1 et 2, caractérisée par le fait que le chariot porte-fraise (8) forme pour chaque unité de fraisage (13) un bloc de palier particulier (11), ces blocs de palier (11) étant disposés librement en saillie sur le côté du corps de chariot qui est tourné vers la pièce.

4. Fraiseuse selon la revendication 3, caractérisée par le fait que le chariot porte-fraise (8) est formé d'un chariot transversal (9) et d'un chariot vertical, le chariot vertical (10), qui entoure une colonne de guidage (9a) du chariot transversal (9), formant les blocs de palier (11) pour les unités de fraisage (13).

5. Fraiseuse selon les revendications 2 et 4, caractérisée par le fait qu'au moins un des blocs de palier (11a) est conçu sous forme de chariot porteur réglable par coulissement relativement au chariot vertical (10).

6. Fraiseuse selon les revendications 3 à 5, caractérisée par le fait que les blocs de palier (11), dans la région faisant saillie librement, peuvent être tendus entre eux axialement par l'intermédiaire d'organes (18) d'espacement.

FIG.1

FIG. 2

FIG. 3

FIG. 4

0142592

FIG.5

15

FIG.6

FIG.7

FIG.8

FIG.9